Europäisches Patentamt

European Patent Office

Office européen des brevets

(19)

(11) EP 0 985 170 B1

(12) EUROPÄISCHE PATENTSCHRIFT

(45) Veröffentlichungstag und Bekanntmachung des Hinweises auf die Patenterteilung:
01.08.2001 Patentblatt 2001/31

(21) Anmeldenummer: 98934776.0

(22) Anmeldetag: 22.05.1998

(51) Int Cl.⁷: $G05B\ 23/02$, $G05B\ 13/04$

(86) Internationale Anmeldenummer:
PCT/DE98/01411

(87) Internationale Veröffentlichungsnummer:
WO 98/54628 (03.12.1998 Gazette 1998/48)

(54) **VERFAHREN ZUR REGELUNG EINES VERZÖGERUNGSBEHAFTETEN PROZESSES MIT AUSGLEICH SOWIE REGELEINRICHTUNG ZUR DURCHFÜHRUNG DES VERFAHRENS**

METHOD FOR CONTROLLING A TIME-LAGGED PROCESS WITH COMPENSATION, AND A CONTROLLING DEVICE FOR CARRYING OUT SAID METHOD

PROCEDE DE REGULATION D'UN PROCESSUS TEMPORISE AVEC COMPENSATION ET SYSTEME DE REGULATION PERMETTANT DE METTRE LEDIT PROCEDE EN OEUVRE

(84) Benannte Vertragsstaaten:
AT BE CH DE ES FR GB IT LI NL SE

(30) Priorität: 28.05.1997 DE 19722431

(43) Veröffentlichungstag der Anmeldung:
15.03.2000 Patentblatt 2000/11

(73) Patentinhaber: SIEMENS AKTIENGESELLSCHAFT
80333 München (DE)

(72) Erfinder: PFEIFFER, Bernd-Markus
D-76199 Karlsruhe (DE)

(56) Entgegenhaltungen:
EP-A- 0 379 215     EP-A- 0 520 233
EP-A- 0 692 752     DE-A- 19 548 909

• P.RIEGER ET AL: "ERMITTLUNG VON MODELLPARAMETERN DURCH NICHTLINEARE OPTIMIERUNG IM CAE-SYSTEM PROMAR FUER MIKRORECHNERREGRLER S 2000-R" MESS. STEUERN REGELN , Bd. 33, Nr. 8, August 1990, Seiten 372-375, XP002079790
• S.ASSADI ET AL: "computer aided optimisation of simplified discrete models for control systems" TRANSACTIONS OF THE INSTITUTE OF MEASUREMENT AND CONTROL, Bd. 11, Nr. 3, Juli 1989, Seiten 138-144, XP000072413

## Beschreibung

Die Erfindung betrifft ein Verfahren zur Regelung eines verzögerungsbehafteten Prozesses mit Ausgleich, insbesondere zur Temperaturregelung, sowie eine Regeleinrichtung zur Durchführung des Verfahrens.

Ein adaptiver Regler für verzögerungsbehaftete Prozesse mit Ausgleich ist aus der DE-OS 39 29 615 bekannt. Er besitzt die Fähigkeit, seine Parameter selbsttätig an die sich zeitlich ändernden Eigenschaften einer Regelstrecke anzupassen. Dazu wird die Antwort des Prozesses auf eine sprungförmige Verstellung des Sollwertes aufgezeichnet und in einem iterativen Verfahren nach einem PTn-Modell gesucht, mit welchem diese Sprungantwort möglichst gut nachgebildet werden kann. Als optimal werden die Parameter des PTn-Modells angesehen, mit welchen der nach der Methode der kleinsten Fehlerquadrate berechnete Fehler zwischen den Sprungantworten des PTn-Modells und des realen Prozesses minimal ist. Nach Abschluß der Prozeßidentifikation wird anhand des ermittelten Prozeßmodells ein Regler nach dem Betragsoptimum entworfen. Betrachtet werden dort einschleifige Regelkreise mit Reglern vom PID-Typ. Die zu regelnden Prozesse zeigen ein Verhalten mit Ausgleich, d. h., sie stellen eine Regelstrecke dar, bei der die Sprungantwort in einen neuen Beharrungszustand einläuft.

Ein Nachteil dieses Verfahrens ist, daß bei der Inbetriebnahme des bekannten adaptiven Reglers ein oft zeitaufwendiger Sprungversuch durchgeführt werden muß, bevor der Regler optimiert werden kann. Nachteilig wirken sich auch kriechende Zeitkonstanten aus, d. h. Pole, die sehr nahe am Ursprung der Laplace-Ebene liegen und zu einem integratorähnlichen Verhalten des Prozesses führen, so daß nach einem Stellgrößensprung sehr lange kein stationärer Zustand erreicht werden kann.

In der deutschen Patentanmeldung mit dem amtlichen Aktenzeichen 195 48 909.8 wurde ein Verfahren zur Regelung eines verzögerungsbehafteten Prozesses mit Ausgleich sowie eine Regeleinrichtung zur Durchführung des Verfahrens vorgeschlagen, bei welchem auf den zeitaufwendigen Sprungversuch bei der Inbetriebnahme eines Reglers verzichtet werden kann. Dabei ist aber von Nachteil, daß eine Speicherung der Meßdaten und ein zeitdiskreter Parameterschätzer mit aufwendigem Rechenverfahren erforderlich sind.

Der Erfindung liegt die Aufgabe zugrunde, ein Verfahren zur Regelung eines verzögerungsbehafteten Prozesses mit Ausgleich, insbesondere zur Temperaturregelung, zu finden, mit welchem die obengenannten Nachteile vermieden werden, sowie eine Regeleinrichtung zur Durchführung des Verfahrens zu schaffen.

Zur Lösung dieser Aufgabe weist das neue Verfahren der eingangs genannten Art die im kennzeichnenden Teil des Anspruchs 1 angegebenen Merkmale auf. Weiterbildungen des Verfahrens sind in den Ansprüchen 2 bis 7 beschrieben. Eine Regeleinrichtung mit den in Anspruch 8 genannten Merkmalen ist zur Durchführung des Verfahrens geeignet.

Die Erfindung hat den Vorteil, daß auf einen zeitaufwendigen Sprungversuch bei der Inbetriebnahme eines Reglers gänzlich verzichtet werden kann. Bereits während der ersten Phase eines Ausregelvorgangs nach einem Sollwertsprung wird ein einfaches IT1-Modell an den Prozeß angenähert, und der erste Sollwert kann nahezu zeitoptimal und überschwingungsfrei angefahren werden. Dies wirkt sich insbesondere bei der Regelung von Temperaturen auf einen vorgegebenen Sollwert mit Hilfe einer verstellbaren Heizung vorteilhaft aus, bei der ein Regler die Temperatur gegen äußere Störungen konstant halten und bei Änderungen der Sollwertvorgabe, beispielsweise an einem chemischen Prozeß, so schnell wie möglich die gewünschte neue Temperatur einstellen soll. Der adaptive Regler paßt sich ohne manuelle Parametrierung und ohne Vorkenntnisse über den Prozeß automatisch an beliebige, verzögerungsbehaftete Prozesse mit Ausgleich an. Die Optimierung des Reglers erfolgt bei der ersten Inbetriebnahme nach dem Einsetzen der Regeleinrichtung in den Regelkreis, ohne daß hierzu Eingaben des Bedienpersonals erforderlich wären. Als Kriterium für das Erreichen eines stationären Zustands nach dem Sollwertsprung werden die Änderungsgeschwindigkeit der Regelgröße und die Regelabweichung ausgewertet und überprüft, wann diese mit einem für ein IT1-Modell parametrierten PI-Regler vorgebbare Grenzwerte unterschreiten. Danach wird der Prozeß anhand eines exakteren Modells, insbesondere eines PT2-Modells, identifiziert. Dieses Modell steht somit bereits nach dem ersten Ausregelvorgang zur Verfügung und kann bereits dann zur Reglereinstellung herangezogen werden.

Die in Temperaturregelungen vorkommenden Strecken sind im allgemeinen mit einfachen PI- oder PID-Reglern beherrschbar, die ein sehr gutes Störverhalten zeigen. Im Führungsverhalten können sie beispielsweise durch folgende zusätzliche Steuerungsmaßnahme unterstützt werden: Bei positiven Sollwertsprüngen ab einer vorgebbaren Mindestgröße erfolgt eine Strukturumschaltung, bei welcher der I-Anteil des PI- oder PID-Reglers abgeschaltet wird, d. h., es wird ein P- bzw. ein PD-Regler benützt; in Sollwertnähe wird der I-Anteil wieder stoßfrei dem Regler zugeschaltet.

Für Strecken mit sehr großen Verzugszeiten ist bei Sollwertsprüngen in vorteilhafter Weise die folgende Steuerungsmaßnahme einsetzbar: Es wird nach dem Sollwertsprung in einem gesteuerten Betrieb die für den neuen Sollwert stationär erforderliche Stellgröße konstant ausgegeben, bis der Sollwert nahezu erreicht ist; danach wird wieder auf den PI- oder PID-Regler umgeschaltet. Diese Strategie ist zwar zeitsuboptimal, aber im Gegensatz zur zeitoptimalen Steuerung nicht von der Schätzgenauigkeit der Streckenzeitkonstanten abhängig.

Durch die Verwendung eines IT1-Modells zur Identifizierung des Prozesses in einer frühen Phase einer ersten Sprungantwort wird der Nachteil exakterer Modelle mit Ausgleich vermieden, daß zu diesem Zeitpunkt noch keine zuverlässigen Schätzungen über die stationäre Prozeßverstärkung möglich sind. Die maximale Anstiegsgeschwindigkeit ist vielmehr vom Verhältnis der Verstärkung zur dominierenden Zeitkonstante, beispielsweise eines PT2-Modells, abhängig. Das IT1-Modell enthält aber bereits einen Hinweis auf die Verzugszeit, die der kleinen Zeitkonstante eines PT2-Modells entspricht, und einen Hinweis auf die Anstiegsgeschwindigkeit. Es bietet somit genügend Informationen, um einen PI-Regler mit einer zunächst vorsichtigen Einstellung zu parametrieren, bei welcher Überschwinger weitgehend vermieden und dennoch ein ausreichend schnelles Regelverhalten erreicht wird.

Eine Regeleinrichtung zur Durchführung des Verfahrens kann vorteilhaft mit einer internen Ablaufsteuerung mit mehreren verschiedenen Phasen, die sich in den Strukturen des Reglers sowie den Modellen, die der Prozeßidentifikation zugrunde gelegt werden, unterscheiden, realisiert werden. Die Regeleinrichtung kann gleichermaßen als Hardwareschaltung oder als Recheneinheit mit einem Programmspeicher, in den ein geeignetes Betriebsprogramm geladen wurde, ausgeführt werden.

Physikalische Modelle für Temperaturregelstrecken lassen sich aus elementaren PT1-Modellen für die einzelnen Teilsysteme mit ihrer Wärmekapazität und den entsprechenden Wärmeübergängen aufbauen. Insgesamt erhält man so PTn-Modelle von meist niedriger Ordnung. An realen Prozessen lassen sich selten mehr als drei relevante Zeitkonstanten nachweisen. Typische Verstärkungen der Prozesse liegen je nach Auslegung der Heizung zwischen 0,5 und 30, Zeitkonstanten zwischen einer und mehreren tausend Sekunden. Im allgemeinen sind Temperaturregelstrecken selbst nicht schwingungsfähig, d. h., sie haben im offenen Regelkreis nur reelle Polstellen und sie weisen meist nur geringfügige Totzeiten auf. Übertragungsnullstellen, d. h. Zählerterme höherer Ordnung in der Übertragungsfunktion, treten auf, wenn die Ausgangstemperatur als Regelgröße nicht am Ende der Wärmeflußkette abgegriffen wird, z. B. wenn bei einem von innen beheizten Ofen die Wärmekapazität der Isolierung oder der Ofenmauerung eine Rolle spielt. Nullstellen können überschwingendes Regelverhalten verursachen. Es fehlt oft eine aktive Kühlung und man beobachtet sehr viel kleinere negative Temperaturgradienten als positive. Dieser Effekt kann mit einem linearen Modell erklärt werden, dem keine negativen Stellgrößen zur Verfügung stehen. Nichtlinearitäten der Temperaturregelstrecke entstehen gegebenenfalls durch Phasenübergänge, beispielsweise Verdampfen, oder Stellglieder mit nichtlinearer Kennlinie, z. B. Ventile.

Weitere Vorteile der neuen Regeleinrichtung entsprechen weitgehend denjenigen der in der eingangs genannten deutschen Patentanmeldung beschriebenen Regeleinrichtung. Diese werden jedoch bei der neuen Regeleinrichtung mit einem erheblich geringeren Rechenaufwand erreicht.

Anhand der Figuren, die ein Ausführungsbeispiel der Erfindung darstellen, werden im folgenden die Erfindung sowie Ausgestaltungen und Vorteile näher erläutert.

Es zeigen:

Figur 1     ein Strukturbild einer Regeleinrichtung und

Figur 2     ein Zeitdiagramm des prinzipiellen Verlaufs einer Sprungantwort.

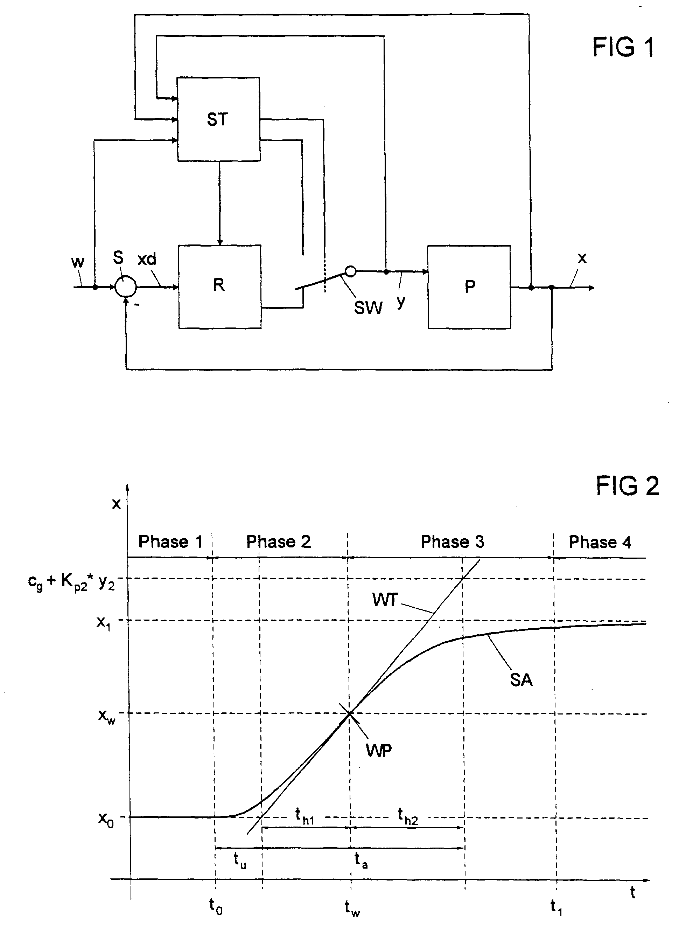

Eine Regeleinrichtung nach Figur 1 dient zur Regelung einer Regelgröße x, z. B. einer Temperatur, die an einem Prozeß P gemessen wird. Ein Subtrahierglied S dient zum Vergleich der gemessenen Regelgröße x mit einem Sollwert w und bildet ein Regelabweichungssignal xd, das auf einen linearen Regler R mit einstellbarer Struktur geführt ist. Im geregelten Betrieb erzeugt der Regler R eine Stellgröße y für den Prozeß P. Der Regelkreis ist somit geschlossen. Die Führungsgröße w, die Regelgröße x und die Stellgröße y sind einer Steuereinheit ST aufgeschaltet, die zur Identifikation des Prozesses P die Parameter wahlweise eines IT1-Modells oder zumindest eines weiteren, exakteren Modells des Prozesses mit Ausgleich berechnet und in Abhängigkeit des Prozeßmodells Struktur und Parameter des linearen Reglers R einstellt. Zusätzlich erzeugt die Steuereinheit ST ein Umschaltsignal für einen Schalter SW, durch welchen zwischen gesteuertem und geregeltem Betrieb umgeschaltet werden kann.

Figur 1 stellt lediglich ein funktionelles Strukturbild einer Regeleinrichtung dar. Selbstverständlich können alle Funktionsblöcke der Regeleinrichtung in einem einzigen elektronischen Gerät zusammengefaßt oder auch dezentral auf verschiedene Geräte verteilt werden.

Anhand Figur 2 soll im folgenden die Funktionsweise der Regeleinrichtung erläutert werden. In Phase 1, die bis zum Zeitpunkt $t_0$ reicht, wird eine Stellgröße y = 0 an den Prozeß P angelegt. In einer Temperaturregelung entspricht diese Phase der Situation, daß bei abgeschalteter Heizung die konstante Stellgröße y = 0 an den Prozeß P ausgegeben wird. Die Regelgröße x befindet sich in einem ersten stationären Zustand $x = x_0 = c_g$. Der Wert $c_g$ wird als Gleichwert erfaßt und abgespeichert.

Sobald ein Bediener einen hinreichend großen Sollwertsprung vorgibt, wird in Phase 2 eingetreten und die maximale Stellgröße $y = y_2 = y_{max}$ durch die Steuereinheit ST in einem gesteuerten Betrieb an den Prozeß P angelegt. In einer Temperaturregelung entspricht dies der vollen Heizleistung. Diese Stellgröße wird so lange beibehalten, bis ein Wendepunkt WP im Verlauf der Regelgröße x festgestellt werden kann. Ein Wendepunkt gilt als erkannt, wenn in zwei aufeinanderfolgenden Abtastschritten die Steigung der Sprungantwort SA zum erstenmal rückläufig ist. Damit die Steigungsinformation nicht durch Meßrauschen verfälscht wird, werden die Meßwerte der Regelgröße x einer Tiefpaßfilterung unterzogen. Wenn die Regelabweichung xd sich um einen vorgegebenen Wert zwischen 50 und 80 % der Sprunghöhe, der vorzugsweise 60 % beträgt, verringert hat, wird auch ohne rückläufige Steigung der Sprungantwort ein Wendepunkt WP angenommen. Anhand einer Tangente WT im Wendepunkt WP, die auch als Wendetangente bezeichnet wird, kann eine Verzugszeit $t_u$, die sich aus dem Schnittpunkt der Wendetangente WT mit der Gerade $x = x_0$ ergibt, berechnet werden zu:

$$t_u = t_w - t_0 - t_{h1} \ , \ t_{h1} = \frac{x_w - x_0}{dx_w / dt}$$

mit

$t_w$    - Zeitpunkt des Wendepunkts WP,

$t_0$    - Zeitpunkt des Sollwertsprungs,

$t_{h1}$    - eine Hilfsgröße,

$x_w$    - Wert der Regelgröße x im Wendepunkt WP,

$x_o$    - Wert der Regelgröße x im ersten stationären Zustand und

$\frac{dx_w}{dt}$ - Steigung der Wendetangente WT.

Mit diesen Informationen wird ein IT1-Prozeßmodell identifiziert mit der Übertragungsfunktion

$$G(s) = \frac{K_i}{s(T_1 s + 1)},$$

deren Verstärkung

$$K_1 = \frac{dx_w / dt}{y_2}$$

und Zeitkonstante

$$T_1 = 2t_u$$

gesetzt werden.

In Phase 3, die durch das Auftreten des Wendepunktes WP eingeleitet wird, wird nun eine PI-Struktur des linearen Reglers R eingestellt, und die Parameter des PI-Reglers werden anhand des IT1-Modells ermittelt. Der Ver-stärkungsfaktor $K_{p1}$ des PI-Reglers wird so eingestellt, wie ein P-Regler für die Regelung einer IT1-Strecke im asymptotischen Grenzfall entworfen werden müßte:

$$K_{p1} = \frac{1}{4 T_1 K_1}$$

In einer zunächst vorsichtigen Einstellung, bei der Überschwinger weitgehend vermieden werden und ein ausreichend schnelles Regelverhalten erreicht wird, beträgt die Nachstellzeit $T_{n1}$ des PI-Reglers das Zwei- bis Zehnfache, vorzugsweise das Sechsfache, der Zeitkonstanten $T_1$.
Die Umschaltung von gesteuertem auf geregelten Betrieb erfolgt stoßfrei, indem der I-Anteil eines PI- oder PID-Reglers bei der Umschaltung entsprechend initialisiert wird.
Da das IT1-Modell nach einem Sollwertsprung nicht in einen neuen Beharrungszustand einläuft, d. h. einen Prozeß ohne Ausgleich modelliert, kann die Prozeßverstärkung zunächst nicht direkt identifiziert werden. Damit aber große Verstärkungsfaktoren des mit dem PI-Regler geregelten Prozesses mit Ausgleich nicht zu Problemen führen, wird der PI-Regler wegen der noch unvollständigen Informationen über den Prozeß P nur sehr vorsichtig ausgelegt. Sobald mit dieser groben Regelung jedoch ein stationärer Zustand erreicht wird, kann die Verstärkung $K_{p2}$ eines Prozeßmodells mit Ausgleich bestimmt werden zu:

$$K_{p2} = \frac{x_1 - x_0}{y_1 - y_0}$$

mit

$x_1$   - Wert der Regelgröße x im zweiten stationären Zustand,

$x_0$   - Wert der Regelgröße x im ersten stationären Zustand,

$y_1$   - Wert der Stellgröße y im zweiten stationären Zustand und

$y_0$   - Wert der Stellgröße y im ersten stationären Zustand.

Als Kriterium für das Erreichen des zweiten stationären Zustands kann beispielsweise überprüft werden, ob die Regelabweichung unterhalb eines vorgegebenen Grenzwertes liegt oder die Steigung der Regelgröße kleiner als ein Bruchteil der Steigung der Wendetangente WT ist.

Mit der Kenntnis der Prozeßverstärkung $K_{p2}$ können nun auch die Informationen aus der Wendetangente WT zur Ermittlung eines exakteren Modells, beispielsweise eines PT2- oder eines PT1Tt-Modells, weitergehend ausgewertet werden. Die Übertragungsfunktion eines PT2-Modells lautet im Laplace-Bereich:

$$G(s) = \frac{K_{p2}}{(T_2 s + 1) \cdot (T_3 s + 1)},$$

die Übertragungsfunktion eines PT1Tt-Modells:

$$G(s) = \frac{K_{p2}}{(T_4 s + 1)} e^{-T_t s}.$$

Die Anstiegszeit $t_a$ der Sprungantwort, die sich aus den Schnittpunkten der Wendetangente WT mit der Gerade bei x = $x_0$, die den ersten stationären Zustand markiert, und der Gerade bei x = $c_g + K_{p2} \cdot y_2$, die einen stationären Zustand markiert, der von der Regelgröße x angefahren werden würde, wenn an den Prozeß P die im gesteuerten Betrieb während der Phase 2 angelegte Stellgröße $y_2$ auch im geregelten Betrieb beibehalten werden würde, ergibt, wird berechnet zu:

$$t_a = t_{h1} + t_{h2} \, , \, t_{h2} = \frac{K_{p2} \cdot y_2 + c_g - x_w}{dx_w / dt}$$

mit

$t_{h2}$   - eine zweite Hilfsgröße,

$y_2$   - Wert der während Phase 2 im gesteuerten Betrieb angelegten Stellgröße y und

$c_g$   - Gleichwert, der sich als stationärer Zustand einstellt, wenn die Stellgröße y = 0 an den Prozeß P angelegt wird.

Falls die Anstiegszeit $t_a$ größer oder gleich dem Zehnfachen der Verzugszeit $t_u$ ist, wird vorzugsweise ein PT2-Modell zur Prozeßidentifikation verwendet. Zur Berechnung der Zeitkonstanten $T_2$ und $T_3$ des PT2-Modells wird ein aus dem Buch "Regelungstechnik I" von Heinz Unbehauen, 7. Auflage, Vieweg Verlag, Braunschweig/Wiesbaden, 1992, Seiten 363 bis 367, bekanntes Verfahren herangezogen und weiterentwickelt. Betrachtet wird die Sprungantwort des PT2-Modells mit dem Verhältnis

$$f = \frac{T_3}{T_2}$$

der beiden Zeitkonstanten $T_2$ und $T_3$. Die Sprungantwort erreicht ihren Wendepunkt WP zum Zeitpunkt

$$t_w = f \frac{\ln f}{f-1} T_2.$$

Aus dem Verlauf der Sprungantwort werden die Anstiegszeit $t_a$ zu

$$t_a = T_2 \left( \frac{T_3}{T_2} \right)^{\frac{T_3}{T_3 - T_2}}$$

und die Verzugszeit $t_u$ zu

$$t_u = \frac{T_3 T_2}{T_3 - T_2} \ln \left( \frac{T_3}{T_2} \right) - t_a + T_3 + T_2$$

bestimmt. Daraus erhält man nach Einsetzen von f:

$$T_2 = t_a f^{\frac{-f}{f-1}}, \quad \frac{t_a}{t_u} = \frac{1}{f^{\frac{-f}{f-1}} (1 + f + \frac{f \ln f}{f-1}) - 1}$$

Damit dieses nichtlineare Gleichungssystem analytisch nach $T_2$ und f aufgelöst werden kann, müssen die Exponentialfunktionen durch lineare Näherungen, die zumindest für den praktisch relevanten Bereich 2 < f < 20 gute Ergebnisse liefern, approximiert werden. Eine geeignete Approximation liefern die beiden folgenden Gleichungen mit Konstanten $p_1$ bis $p_4$:

$$\frac{t_a}{t_u} \approx p_1 f + p_2, \quad p_1 = 1{,}1919, \quad p_2 = 8{,}0633$$

$$T_2 \approx t_a \frac{1}{p_3 f + p_4}, \quad p_3 = 1{,}0722, \quad p_4 = 2{,}0982.$$

Mit diesen Gleichungen werden die Zeitkonstanten $T_2$ und $T_3$ des PT2-Modells berechnet zu:

$$T_2 = t_a \cdot \cfrac{1}{\cfrac{p_3}{p_1}\left(\cfrac{t_a}{t_u} - p_2\right) + p_4}$$

$$T_3 = \frac{T_2}{p_1}\left(\frac{t_a}{t_u} - p_2\right).$$

Mit diesem PT2-Modell wird ein PI- oder PID-Regler entworfen. Der Entwurf erfolgt bei Temperaturstrecken vorzugsweise I-dominant, da die Schätzwerte für die große Zeitkonstante aus der Wendetangente ohnehin nur recht grob sind. Zur Berechnung der Verstärkung $K_{p3}$ des Reglers wird zunächst eine Verstärkung $K_{p4}$ eines P-Reglers ermittelt, die bei der Regelung einer PT2-Strecke mit dem P-Regler den asymptotischen Grenzfall ergeben würde:

$$K_{p4} = \left(\frac{(T_2 + T_3)^2}{4T_2 T_3} - 1\right)\frac{1}{K_{p2}}.$$

Die Nullstelle des PI-Reglers wird durch die Einstellung seiner Zeitkonstante $T_{n2}$ zwischen die beiden Streckenpole gelegt:

$$T_{n2} = \frac{T_2 + T_3}{2}$$

Die Verstärkung $K_{p3}$ des Reglers wird auf einen Wert

$$1{,}5 \cdot K_{p4} < K_{p3} < 2{,}5 \cdot K_{p4},$$

vorzugsweise $K_{p3} = 2 \cdot K_{p4}$, eingestellt.

In ähnlicher Weise kann auch der Entwurf eines PID-Reglers mit verzögertem D-Anteil und der Übertragungsfunktion

$$G_{PID}(s) = K_{p5}\left(1 + \frac{1}{T_{n3}s} + \frac{T_v s}{\frac{1}{v}T_v s + 1}\right)$$

erfolgen. Die erste Nullstelle des PID-Reglers wird etwas weiter rechts plaziert als die Nullstelle des PI-Reglers:

$$T_{n1,\,PID} = 0{,}7 \cdot T_{n,\,PI}.$$

Die zweite Nullstelle wird etwas rechts vom schnellen Streckenpol gelegt:

$$T_{n2,\,PID} = 1{,}2 \cdot T_2.$$

Die beiden Zeitkonstanten $T_{n3}$ und $T_v$ des PID-Reglers werden so gewählt, daß sich genau die beiden reellen Nullstellen $T_{n1,\,PID}$ und $T_{n2,\,PID}$ für den Zähler der Übertragungsfunktion $G_{PID}(s)$ des Reglers ergeben:

$$T_{n3} = T_{n1,\,PID} + T_{n2,\,PID},$$

$$T_v = T_{n1,\,PID} \cdot T_{n2,\,PID}/T_{n3}.$$

Als Vorgabewert wird der Vorhaltfaktor v auf "5" gesetzt. Der PID-Regler kann nun mit der kräftigen Verstärkung

$K_{p5} = 6 \cdot K_{p4}$ betrieben werden.

Falls die Anstiegszeit $t_a$ kleiner dem Zehnfachen der Verzugszeit $t_u$ ist, wird vorzugsweise zur Modellierung des Prozesses P ein PT1Tt-Modell verwendet mit der Zeitkonstante $T_4 = t_a$ und der Totzeit $T_t = t_u$. Bei diesem Streckenverhalten wird vorzugsweise ein PI-Regler eingesetzt mit der Nachstellzeit $T_{n4} = T_4$ und der Verstärkung

$$K_{p6} = \frac{T_4}{2T_t}$$

Einer der auf diese Weise für ein exakteres Modell der Strecke P entworfenen PI- oder PID-Regler wird nach der Phase 3 in den Regelkreis eingesetzt und regelt während Phase 4 den Prozeß in den zweiten stationären Zustand. Dazu wird von der Steuereinheit ST (Figur 1) der lineare Regler P auf eine PI- oder PID-Struktur eingestellt und entsprechend parametriert.

Die beschriebene Regeleinrichtung kommt also in vorteilhafter Weise ohne einen echten Parameterschätzer aus. In der Steuereinheit ST wird daher nur wenig Speicherplatz und eine geringe Rechenleistung im Vergleich zu den bekannten Regeleinrichtungen benötigt. Die bei der Prozeßidentifikation gewonnenen Informationen sind jedoch nicht ausreichend genau zur Auslegung einer zeitoptimalen Steuerung. Die neue Regeleinrichtung kann jedoch im Vergleich zu den bekannten Regeleinrichtungen auf Anhieb überzeugen, insbesondere bei Berücksichtigung der Aufwandsersparnis.

Bei einem hinreichend großen Sollwertsprung während der ersten Inbetriebnahme der Regeleinrichtung wird in der Phase 2 die Stellgröße auf ihren Maximalwert gesetzt, d. h. $y_2 = y_{max}$. Bei weiteren Sollwertsprüngen im späteren Betrieb kann auf Wunsch des Bedieners erneut ein Adaptionsvorgang durchgeführt werden. Dazu wird aus dem vor dem Sollwertsprung herrschende] stationären Zustand mit der Regelgröße $x = x_0$ in Phase 2 eingetreten und bei einem positiven Sprung eine Stellgröße y mit dem Wert

$$y_2 = 1{,}5 \cdot \frac{w - c_g}{K_{p2}}$$

in einem gesteuerten Betrieb angelegt. Die Phasen 2, 3 und 4 werden bei einem erneuten Adaptionsvorgang wie in der oben beschriebenen Weise durchlaufen. Je nach Qualität der Meßsignale und Größenordnung der Prozeßverstärkung sind Mindest sprunghöhen zwischen 10 und 40 % der maximalen Sprunghöhe für einen Adaptionswunsch zu empfehlen.

In vorteilhafter Weise werden bei der neuen Regeleinrichtung und dem neuen Regelungsverfahren keine speziellen physikalischen Gesetzmäßigkeiten des zu regelnden Prozesses P benötigt. Daher ist grundsätzlich auch ein Einsatz an Druckund Durchflußregelstrecken, bei geregelten Stellantrieben und der Füllstandsregelung möglich, vorzugsweise wenn sie folgenden system-dynamischen Anforderungen genügen:

1. Stabiles, verzugsbehaftetes asymptotisches Einschwingverhalten. Ausgeschlossen sind damit Prozesse, die schon ohne Regelung ein oszillierendes oder grenzstabiles Verhalten zeigen, sowie Regelstrecken ohne Ausgleich.

2. Hinreichend lineares Verhalten über einen hinreichend großen Arbeitsbereich. Hinreichend heißt dabei, daß sowohl für die Identifikation als auch für den normalen Regelungsbetrieb nichtlineare Effekte vernachlässigt werden dürfen. Allerdings ist es mit einem selbsteinstellenden Regler an einem nichtlinearen Prozeß in vorteilhafter Weise möglich, beim Wechsel des Arbeitspunktes den Prozeß neu zu identifizieren, wenn der Adaptionsvorgang in einer kleinen Umgebung des neuen Arbeitspunktes durchgeführt wird. Wenn bestimmte statische Nichtlinearitäten, z. B. Ventilkennlinien, vorab bekannt sind, ist es in jedem Fall sinnvoll, sie mit einem Polygonzug zu kompensieren und so das Prozeßverhalten zu linearisieren.

3. Steuerbarkeit des Prozesses mit einem einseitigen Stellsignal, beispielsweise von 0 bis 100 %. Damit sind z. B. Prozesse ausgeschlossen, die zur Temperaturregelung neben einer aktiven Heizung auch eine aktive Kühlung benötigen. Diese Einschränkung kann aber umgangen werden, indem eine Split-Range-Ausgangsstufe hinter den Regler geschaltet und so parametriert wird, daß Heiz- und Kühlverhalten vergleichbare Dynamik haben.

4. Ausreichende Qualität der Meßsignale bezüglich des Signal-/Stör-Verhältnisses.

5.Nicht zu große Verzugszeiten. Die Adaption ist vorzugsweise für Strecken ausgelegt, bei welchen die Anstiegszeit $t_a$ größer als die zehnfache Verzugszeit $t_u$ ist. Das ist bei den meisten Temperaturregelungen der Fall, für welche sowohl ein PI- als auch ein PID-Regler entworfen werden kann. Für den Fall, daß die Anstiegszeit $t_a$ nur größer als das Dreifache der Verzugszeit $t_u$ ist, wird ein linearer Regler mit PI-Struktur entworfen. Wird auch diese Bedingung nicht erfüllt, so muß mit Überschwingern während des Adaptionsvorgangs gerechnet werden.

## Patentansprüche

1. Verfahren zur Regelung eines verzögerungsbehafteten Prozesses mit Ausgleich, d. h. eines Prozesses, dessen Sprungantwort in einen neuen Beharrungszustand einläuft, insbesondere zur Temperaturregelung, dadurch gekennzeichnet,

   - daß nach einem Sollwertsprung aus einem ersten stationären Zustand ($x = x_0$) heraus die Stellgröße (y) sprungförmig zur Verringerung einer Regelabweichung (xd) in einem gesteuerten Betrieb auf einen ersten konstanten Wert ($y_2$) gesetzt wird,
   - daß, nachdem ein Wendepunkt (WP) im Verlauf der Regelgröße (x) festgestellt wurde oder spätestens nachdem die Regelabweichung (xd) sich um einen vorgegebenen Wert zwischen 50 und 80 % der Sprunghöhe verringert hat, ein IT1-Modell des Prozesses (P) identifiziert wird,
   - daß in einer ersten Reglereinstellung eine PI-Struktur und in Abhängigkeit von dem IT1-Modell die Parameter eines linearen Reglers (R) eingestellt werden, der danach den Prozeß (P) in einen zweiten stationären Zustand ($x = x_1$) regelt,
   - daß, nachdem der zweite stationäre Zustand näherungsweise erreicht wurde, ein exakteres Modell mit Ausgleich, d. h. ein Modell, dessen Sprungantwort in einen neuen Beharrungszustand einläuft, für den Prozeß (P) ermittelt wird und
   - daß in einer zweiten Reglereinstellung in Abhängigkeit des exakteren Modells mit Ausgleich erneut Struktur und Parameter des linearen Reglers (R) eingestellt werden.

2. Verfahren nach Anspruch 1, dadurch gekennzeichnet, daß der vorgegebene Wert 60 % beträgt.

3. Verfahren nach Anspruch 1 oder 2, dadurch gekennzeichnet,

   - daß die Verstärkung ($K_{p1}$) des linearen Reglers mit PI-Struktur in der ersten Reglereinstellung auf

$$K_{p1} = \frac{1}{4 T_1 K_i}$$

mit

$K_i$ - Verstärkung des IT1-Modells und
$T_1$ - Zeitkonstante des IT1-Modells

und die Nachstellzeit $T_{n1}$ auf

$$T_{n1} = a \cdot T_1$$

mit a zwischen 2 und 10 eingestellt werden.

4. Verfahren nach Anspruch 3, dadurch gekennzeichnet, daß der Wert a gleich 6 gesetzt wird.

5. Verfahren nach einem der vorhergehenden Ansprüche, dadurch gekennzeichnet,
   - daß als exakteres Modell ein PT2-Modell oder ein PT1Tt-Modell ermittelt wird, deren Verstärkung $K_{p2}$ berechnet

wird zu:

$$K_{p2} = \frac{x_1 - x_0}{y_1 - y_0}$$

mit

$x_1$    - Wert der Regelgröße x im zweiten stationären Zustand,
$x_0$    - Wert der Regelgröße x im ersten stationären Zustand,
$y_1$    - Wert der Stellgröße y im zweiten stationären Zustand und
$y_0$    - Wert der Stellgröße y im ersten stationären Zustand,

und

-   daß die Zeitkonstanten T2 und $T_3$ für das PT2-Modell bzw. die Zeitkonstante $T_4$ und die Totzeit $T_t$ für das PT1Tt-Modell anhand der im gesteuerten Betrieb gemessenen Sprungantwort (SA) des Prozesses (P) ermittelt werden.

6.   Verfahren nach Anspruch 5, dadurch gekennzeichnet,

-   daß anhand der Sprungantwort (SA) des Prozesses (P) im gesteuerten Betrieb die Verzugszeit $t_u$ und die Anstiegszeit $t_a$ bestimmt werden und
-   daß, falls die Anstiegszeit $t_a$ größer oder gleich dem Zehnfachen der Verzugszeit $t_u$ ist, ein PT2-Modell zur Identifikation des Prozesses (P) verwendet wird mit

$$T_2 = t_a \cdot \cfrac{1}{\dfrac{p_3}{p_1}\left(\dfrac{t_a}{t_u} - p_2\right) + p_4}$$

$$T_3 = \frac{T_2}{p_1}\left(\frac{t_a}{t_u} - p_2\right),$$

wobei $p_1$ bis $p_4$ Konstanten mit den Werten

$p_1 = 1{,}1919$
$p_2 = 8{,}0633$
$p_3 = 1{,}0722$ und
$p_4 = 2{,}0982$

sind und, falls die Anstiegszeit $t_a$ kleiner dem Zehnfachen der Verzugszeit $t_u$ ist, ein PT1Tt-Modell verwendet wird mit der Zeitkonstanten $T_4 = t_a$ und der Totzeit $T_t = t_u$.

7.   Verfahren nach einem der vorhergehenden Ansprüche, dadurch gekennzeichnet, daß nach einem weiteren Sollwertsprung die Stellgröße (y) sprungförmig zur Verringerung der Regelabweichung (xd) in einem gesteuerten Betrieb auf einen weiteren konstanten Wert gesetzt und erneut ein Adaptionsvorgang mit den vorhergehenden Schritten durchgeführt wird.

8.   Regeleinrichtung zur Durchführung eines Verfahrens nach einem der vorhergehenden Ansprüche, gekennzeichnet durch:

-   einen linearen Regler (R), dessen Struktur und Parameter einstellbar sind und der eine von der Regelabweichung (xd) abhängige Stellgröße (y) erzeugt,
-   einen Schalter (SW) zur wahlweisen Aufschaltung der vom linearen Regler (R) erzeugten Stellgröße in einem geregelten Betrieb oder einer vorgebbaren Stellgröße in einem gesteuerten Betrieb auf den Prozeß (P) und
- eine Steuereinheit (ST), durch welche

- nach einem Sollwertsprung aus einem stationären Zustand ($x = x_0$) heraus die Stellgröße (y) sprungförmig zur Verringerung der Regelabweichung (xd) in einem gesteuerten Betrieb auf einen ersten konstanten Wert ($y_2$) gesetzt wird,
- nachdem ein Wendepunkt (WP) im Verlauf der Regelgröße (x) festgestellt wurde oder spätestens nachdem die Regelabweichung (xd) sich um einen vorgegebenen Wert zwischen 50 % und 80 % der Sprunghöhe verringert hat, ein IT1-Modell des Prozesses (P) identifiziert wird,
- in einer ersten Reglereinstellung eine PI-Struktur und in Abhängigkeit von dem IT1-Modell die Parameter des linearen Reglers (R) eingestellt werden, der danach den Prozeß (P) in einen zweiten stationären Zustand ($x = x_1$) regelt,
- nachdem der zweite stationäre Zustand näherungsweise erreicht wurde, ein exakteres Prozeßmodell mit Ausgleich, d. h. ein Modell, dessen Sprungantwort in einen neuen Beharrungszustand einläuft, ermittelt wird und
- in einer zweiten Reglereinstellung in Abhängigkeit des exakteren Modells mit Ausgleich erneut Struktur und Parameter des linearen Reglers (R) eingestellt werden.

**Claims**

1. Method of closed-loop control of a time-lagged self-regulating process, i.e. a process whose step-change response enters a new steady-state condition, in particular for closed-loop temperature control, characterized

   - in that, to reduce a system deviation (xd) after a setpoint step change, the manipulated variable (y) is abruptly set, starting from a first steady-state condition ($x = x_0$) to a first constant value ($y_2$) in an open-loop controlled mode,
   - in that, after a point of inflexion (WP) in the curve of the controlled variable (x) has been detected or, at the latest, after the control deviation (x) has decreased by a specified value between 50 and 80% of the step-change height, an IT1 model of the process (P) is identified,
   - in that, in a first closed-loop controller adjustment, a PI structure and, depending on the IT1 model, the parameters of a linear closed-loop controller (R) are set that then adjusts the process (P) to a second steady-state condition ($x = x_1$),
   - in that, after the second steady-state condition has approximately been reached, a more exact self-regulating model, i.e. a model whose step-change response enters a new steady-state condition, is found for the process (P) and
   - in that, in a second closed-loop controller adjustment, the structure and parameters of the linear closed-loop controller (R) are adjusted as a function of the more exact self-regulating model.

2. Method according to Claim 1, characterized in that the specified value is 60%.

3. Method according to Claim 1 or 2, characterized

   - in that the gain ($K_{p1}$) of the linear closed-loop controller having a PI structure is adjusted in the first closed-loop controller adjustment to

$$K_{p1} = \frac{1}{4 T_1 K_1}$$

   where $K_i$ is the gain of the IT1 model and
   $T_1$ is the time constant of the IT1 model
   and the reset time $T_{n1}$ is adjusted to

$$T_{n1} = a \cdot T_1$$

   where a is between 2 and 10.

**4.** Method according to Claim 3, characterized in that the value of a is set equal to 6.

**5.** Method according to one of the preceding claims, characterized

- in that, as a more exact model, a PT2 model or a PT1Tt model is found whose gain $K_{p2}$ is calculated to be:

$$K_{p2} = \frac{x_1 - x_0}{y_1 - y_0}$$

where

$x_1$ is the value of the controlled variable x in the second steady-state condition
$x_0$ is the value of the controlled variable x in the first steady-state condition,
$y_1$ is the value of the manipulated variable y in the second steady-state condition and
$y_0$ is the value of the manipulated variable y in the first steady-state condition and

- in that the time constants $T_2$ and $T_3$ for the PT2 model or the time constant $T_4$ and the dead time $T_t$ for the PT1Tt model are found from that step-change response (SA) of the process (P) that is measured in the open-loop controlled mode.

**6.** Method according to Claim 5, characterized

- in that the time lag $t_u$ and the rise time $t_a$ are determined from the step-change response (SA) of the process (P) in the open-loop controlled mode and
- in that, if the rise time $t_a$ is greater than or equal to ten times the time lag $t_u$, a PT2 model is used to identify the process (P), where

$$T_2 = t_a \cdot \frac{1}{\dfrac{p_3}{p_1}\left(\dfrac{t_a}{t_u} - p_2\right) + p_4}$$

$$T_3 = \frac{T_2}{p_1}\left(\frac{t_a}{t_u} - p_2\right),$$

where $p_1$ to $p_4$ are constants having the values

$p_1$ = 1.1919
$p_2$ = 8.0633
$p_3$ = 1.0722 and
$p_4$ = 2.0982

and, if the rise time $t_a$ is less than ten times the time lag $t_u$, a PT1Tt model is used that has the time constants $T_4 = t_a$ and the dead time $T_t = t_u$.

**7.** Method according to one of the preceding claims, characterized in that, after a further setpoint step change, the manipulated variable (y) is abruptly set to a further constant value in a open-loop controlled mode to reduce the system deviation (xd) and an adaptation process is again carried out that comprises the preceding steps.

**8.** Closed-loop control device for carrying out a method according to one of the preceding claims, characterized by:

- a linear closed-loop controller (R) whose structure and parameters are adjustable and that generates a manipulated variable (y) that is dependent on the system deviation (xd),

- a switch (SW) for optionally applying the manipulated variable generated from the linear closed-loop controller (R) in a closed-loop controlled mode or a specified manipulated variable in an open-loop controlled mode to the process (P) and
- an open-loop control unit (ST) that

    - after a setpoint step change, abruptly sets the manipulated variable (y), to reduce the system deviation (xd), in an open-loop controlled mode to a first constant value ($y_2$) starting from a steady-state condition ($x = x_0$),
    - after a point of inflexion (WP) has been detected in the curve of the closed-loop controlled variable (x) or, at the latest, after the system deviation (xd) has decreased by a specified value between 50% and 80% of the step-change height, identifies an IT1 model of the process (P),
    - in a first controller adjustment, establishes a PI structure and, depending on the IT1 model, the parameters of the linear closed-loop controller (R) are set that then adjust the process (P) to a second steady-state condition ($x = x_1$),
    - after the second stationary state has approximately been reached, finds a more exact self-regulating model, i.e. a model whose step-change response enters a new steady-state condition and
    - in a second controller adjustment, again establishes a structure and parameters of the linear closed-loop controller (R) as a function of the more exact self-regulating model.

**Revendications**

1. Procédé de régulation d'un processus temporisé avec compensation, c'est-à-dire d'un processus dont la réponse à une variation brusque entre dans un nouvel état stationnaire, notamment de régulation de la température, caractérisé par le fait

    - que, après une variation brusque de valeur de consigne, à partir d'un premier état stationnaire ($x = x_0$), on met brusquement la grandeur réglante (y) à une première valeur constante ($y_2$) lors d'un fonctionnement commandé afin de réduire une différence de régulation (xd),
    - que, après avoir constaté un point d'inflexion (WP) dans la courbe de la grandeur réglée (x) ou au plus tard après que la différence de régulation (xd) s'est réduite d'une valeur prescrite entre 50 et 80 % de la hauteur de variation brusque, on identifie un modèle IT1 du processus (P),
    - que, dans un premier réglage du régulateur, on règle une structure PI et, en fonction du modèle IT1, les paramètres d'un régulateur linéaire (R) qui régule ensuite le processus (P) vers un deuxième état stationnaire ($x = x_1$),
    - que, après avoir approximativement atteint le deuxième état stationnaire, on détermine pour le processus (P) un modèle plus exact avec compensation, c'est-à-dire un modèle dont la réponse à une variation brusque entre dans un nouvel état stationnaire, et
    - que, dans un deuxième réglage de régulateur, on règle à nouveau la structure et les paramètres du régulateur linéaire (R) en fonction du modèle plus exact avec compensation.

2. Procédé selon la revendication 1, caractérisé par le fait que la valeur prescrite vaut 60 %.

3. Procédé selon la revendication 1 ou 2, caractérisé par le fait

    - qu'on règle l'amplification ($K_{p1}$) du régulateur linéaire avec structure PI dans le premier réglage de régulateur sur

$$K_{p1} = \frac{1}{4 T_1 K_i}$$

avec

    $K_i$ : amplification du modèle IT1 et
    $T_1$ : constante de temps du modèle IT1

et le temps de compensation $T_{n1}$ sur

$$T_{n1} = a \cdot T_1$$

avec a entre 2 et 10.

4. Procédé selon la revendication 3, caractérisé par le fait qu'on pose la valeur a égale à 6.

5. Procédé selon l'une des revendications précédentes, caractérisé par le fait

- qu'on détermine comme modèle plus exact un modèle PT2 ou un modèle PT1Tt dont l'amplification $K_{p2}$ est :

$$K_{p2} = \frac{x_1 - x_0}{y_1 - y_0}$$

avec

$x_1$ :  valeur de la grandeur réglée x dans le deuxième état stationnaire
$x_0$ :  valeur de la grandeur réglée x dans le premier état stationnaire
$y_1$ :  valeur de la grandeur réglante y dans le deuxième état stationnaire et
$y_0$ :  valeur de la grandeur réglante y dans le premier état stationnaire,

et
- qu'on détermine les constantes de temps $T_2$ et $T_3$ pour le modèle PT2 ou la constante de temps $T_4$ et le temps mort $T_t$ pour le modèle PT1Tt à l'aide de la réponse (SA) du processus (P) à une variation brusque, réponse mesurée lors du fonctionnement commandé.

6. Procédé selon la revendication 5, caractérisé par le fait

- qu'on détermine à l'aide de la réponse à une variation brusque (SA) du processus (P) lors du fonctionnement commandé le retard $t_u$ et le temps de croissance $t_a$ et
- que, si le temps de croissance ta est supérieur ou égal à dix fois le retard tu, on utilise un modèle PT2 pour l'identification du processus (P) avec

$$T_2 = t_a \cdot \frac{1}{\frac{p_3}{p_1}\left(\frac{t_a}{t_u} - p_2\right) + p_4}$$

$$T_3 = \frac{T_2}{p_1}\left(\frac{t_a}{t_u} - p_2\right)$$

$p_1$ à $p_4$ étant des constantes avec les valeurs
$p_1$ = 1,1919
$P_2$ = 8,0633
$p_3$ = 1,0722 et
$p_4$ = 2,0982

et, si le temps de croissance $t_a$ est inférieur à dix fois le retard $t_u$, on utilise un modèle PT1Tt avec les constantes de temps $T_4$ = ta et le temps mort $T_t$ = $t_u$.

7. Procédé selon l'une des revendications précédentes, caractérisé par le fait que, après une autre variation brusque de valeur de consigne, on met brusquement la grandeur réglante (y) à une autre valeur constante lors d'un fonctionnement commandé afin de réduire la différence de régulation (xd) et on effectue à nouveau l'opération d'adaptation avec les étapes précédentes.

8. Dispositif de régulation pour la mise en oeuvre d'un procédé selon l'une des revendications précédentes, caractérisé par :

- un régulateur linéaire (R) dont la structure et les paramètres sont réglables et qui produit une grandeur réglante (y) dépendante de la différence de régulation (xd),
- un commutateur (SW) pour brancher sélectivement sur le processus (P) la grandeur réglante produite par le régulateur linéaire (R) lors d'un fonctionnement régulé ou une grandeur réglante prescriptible lors d'un fonctionnement commandé, et
- une unité de commande (ST) qui

- après une variation brusque de valeur de consigne, à partir d'un état stationnaire ($x = x_0$), met brusquement la grandeur réglante (y) à une première valeur constante ($y_2$) lors d'un fonctionnement commandé afin de réduire la différence de régulation (xd),

- après avoir constaté un point d'inflexion (WP) dans la courbe de la grandeur réglée (x) ou au plus tard après que la différence de régulation (xd) s'est réduite d'une valeur prescrite entre 50 % et 80 % de la hauteur de variation brusque, identifie un modèle IT1 du processus (P),

- dans un premier réglage du régulateur, règle une structure PI et, en fonction du modèle IT1, les paramètres du régulateur linéaire (R) qui régule ensuite le processus (P) vers un deuxième état stationnaire ($x = X_1$),

- après avoir approximativement atteint le deuxième état stationnaire, détermine pour le processus (P) un modèle plus exact avec compensation, c'est-à-dire un modèle dont la réponse à une variation brusque entre dans un nouvel état stationnaire, et

- dans un deuxième réglage de régulateur, règle à nouveau la structure et les paramètres du régulateur linéaire (R) en fonction du modèle plus exact avec compensation.

FIG 1

FIG 2